# EUROPÄISCHE PATENTSCHRIFT

(11) **EP 0 435 225 B1**
(45) Veröffentlichungstag und Bekanntmachung des Hinweises auf die Patenterteilung: **12.03.1997**
(21) Anmeldenummer: 90125280.9
(22) Anmeldetag: 21.12.1990
(51) Int. Cl.: G06F 3/147, B62B 3/10

(54) **Verfahren und Einrichtung zum Versorgen verschiedener Abteilungen eines Selbstbedienungs-Grossmarktes mit für eine Abteilung spezifischen Informationen**
Method and device for supplying different departments of a self-service supermarket with information
Méthode et dispositif pour délivrer les différents rayons d'un supermarché libre-service avec informations

(30) Priorität: 23.12.1989 DE 3942939
(43) Veröffentlichungstag der Anmeldung: 03.07.1991
(73) Patentinhaber: SYSTEC Ausbausysteme GmbH, D-82178 Puchheim (DE)
(72) Erfinder: Sonnendorfer, Horst, W-8031 Eichenau (DE); Wieth, Franz, W-8031 Eichenau (DE)
(74) Vertreter: von Kirschbaum, Albrecht, Dipl.-Ing.

(56) Entgegenhaltungen:
- EP-A- 0 133 235
- EP-A- 0 170 194
- EP-A- 0 176 959
- FR-A- 2 596 902
- US-A- 4 325 146
- US-A- 4 766 295

## Beschreibung

Die Erfindung betrifft ein Verfahren und eine Einrichtung zum Versorgen verschiedener Abteilungen eines mit einer Vielzahl Einkaufswagen bestückten Selbstbedienungs-(SB-) Großmarktes mit für eine Abteilung spezifischen Informationen.

In SB-Großmärkten werden die Kunden häufig über zentral gesteuerte Lautsprecherdurchsagen auf besonders vorteilhafte Angebote, Sonderangebote, neue Produkte u.ä. hingewiesen. Da diese Lautsprecherdurchsagen in vielen Fällen oft ohne Pause in immer derselben Reihenfolge erfolgen, stellen sie auf die Dauer nicht nur eine Belästigung dar, sondern rufen auch aufgrund der ständigen Wiederholungen bei dem Zuhörer ein zunehmendes Desinteresse hervor.

In SB-Großmärkten werden inzwischen auch dezentral, d.h. in Abteilungen, welche mit für die jeweilige Abteilung spezifischer Information zu versorgen sind, Sendeeinrichtungen verwendet. Von diesen Sendeeinrichtungen werden drahtlos die für die jeweilige Abteilung vorgesehenen Informationen an Empfangseinrichtungen übertragen, die an allen Einkaufswagen des SB-Großmarktes angebracht sind. Die empfangenen Informationen werden über Lautsprecher akustisch abgegeben und/oder auf verhältnismäßig großen Bildschirmen wiedergegeben, welche ebenfalls an den Einkaufswagen vorgesehen und mit den dort angebrachten Empfangseinrichtungen verbunden sind. Die Informationen, welche über die Lautsprecher an den Einkaufswagen in den einzelnen Abteilungen abgegeben werden, werden jedoch von den sich in den entsprechenden Abteilungen aufhaltenden Kunden ähnlich störend empfunden wie die zentralen Lautsprecherdurchsagen. Bei den an den Schiebegriffen der Einkaufswagen angebrachten Bildschirmen wird zum einen deren Größe als störend empfunden und zum anderen wird für die Einrichtung, über welche der Bildschirm angesteuert und mit der benötigten Energie versorgt wird, oft beachtlicher Raum benötigt, wodurch der ohnehin verhältnismäßig begrenzte Platz in den Einkaufswagen noch weiter beschränkt wird.

Aus EP-A-0 170 194 ist eine Vorrichtung zur Speicherung und Ausgabe von Informationsmengen über eine Ware bekannt, bei welcher auf einem Einkaufswagen ein Ausgabegerät sowie eine Abfrageeinheit vorgesehen sind. Ferner sind bei dieser Vorrichtung eine zentrale Datenverarbeitungseinheit mit zugeordneter zentraler Speichereinheit und/oder eine auf dem Einkaufswagen zusätzlich untergebrachte Datenverarbeitungseinheit mit zugeordneter Speichereinheit vorgesehen. Das auf dem Einkaufswagen vorgesehene Ausgabegerät weist einen Monitor mit Bildschirm auf, auf welchem über eine der Datenverarbeitungseinheiten Informationsmengen oder auch von beiden Datenverarbeitungseinheiten mit den zugeordneten Speichereinheiten jeweils Teile von Informationsmengen abrufbar sind, welche dann als Bilder auf dem Bildschirm des Monitors darstellbar sind. Bei dieser bekannten Vorrichtung werden jedoch Informationen nur nach einer speziellen Anforderung des Benutzers mittels einer Abfrageeinheit geliefert.

Ferner sind in EP-A-0 170 194 im Boden oder in der Wand Induktionsschleifen zur sicheren Datenübertragung vorgesehen. Nachteilig hierbei ist jedoch, daß das Vorsehen der Induktionsschleifen mit großem baulichen Aufwand und somit auch mit hohem Kostenaufwand verbunden ist. Dies ist insbesondere dann der Fall, wenn in bestehenden SB-Warenhäusern Vorrichtungen zur Speicherung und Ausgabe von Informationen eingerichtet werden sollen.

Zur Erstellung einer sogenannten Kundenlaufstudie unbedingt erforderliche Daten werden bisher mit Hilfe einer mehr oder weniger großen Anzahl von Personen eine angemessene Zeitlang dadurch gesammelt, daß einzelne Kunden beobachtet bzw. insbesondere befragt werden, um auf diese Weise beispielsweise zu erfahren, welchen Weg der einzelnene Kunde durch den SB-Großmarkt nimmt, ob er bestimmte sogenannte Bedienungsshops frequentieren wird oder frequentiert hat, wie lange er sich in den einzelnen Abteilungen aufgehalten hat, usw. Die beobachteten bzw. erfragten Fakten werden dann in vorbereiteten Fragebögen oder Tabellen festgehalten, oder beispielsweise auch auf Band gesprochen.

Allein die Vorbereitung sowie die anschließende Durchführung solcher Untersuchungen in Form von Beobachtungen, Befragungen u.ä. ist nicht nur äußerst zeitintensiv und i.a. auch personalintensiv, sondern bei solchen Befragungen von Kunden ist man auch sehr von dem guten Willen und der Mitarbeit sowie von der Bereitschaft des einzelnen Kunden abhängig, auf die gestellten Fragen mit der erforderlichen Genauigkeit und Ausführlichkeit einzugehen. Trotz des erforderlichen hohen Zeit- und Personalaufwands sind die auf diese Weise ermittelten Fakten und Ergebnisse immer noch mit einem mehr oder weniger großen Unsicherheitsfaktor behaftet; die anschließend zu erstellende bzw. erstellte Kundenlaufstudie muß daher oft zu unkorrekten und nicht in vollem Umfang den tatsächlichen Gegebenheiten entsprechenden Ergebnissen kommen.

Eine Aufgabe der Erfindung ist es daher, ein Verfahren und eine Einrichtung zum Versorgen verschiedener Abteilungen eines mit einer Vielzahl Einkaufswagen bestückten SB-Großmarktes mit für eine Abteilung spezifischen Informationen zu schaffen, bei welchem jedem Kunden eines Großmarktes in den einzelnen Abteilungen ganz gezielt bestimmte, kurzzeitig änderbare Informationen einzeln zugänglich gemacht werden, und gegebenenfalls jede effektiv erfolgte Informationsabgabe festgehalten wird.

Ferner soll ein Verfahren geschaffen werden, bei welchem zusätzlich zu der optischen Wiedergabe von für eine Abteilung spezifischen Informationen der Weg jedes der von Kunden eines Großmarktes benutzten Einkaufswagen und gegebenenfalls auch die Verweildauer jedes dieser Einkaufswagens in einzelnen Abteilungen sicher und zuverlässig erfaßt und festgehalten wird.

Gemäß der Erfindung ist dies bei einem Verfahren der gattungsgemäßen Art durch die Verfahrensschritte im Anspruch 1 gelöst. Vorteilhafte Weiterbildungen der erfindungsgemäßen Verfahren sind Gegenstand der unmittelbar oder mittelbar auf den Anspruch 1 rückbezogenen Unteransprüche. Ferner ist gemäß der Erfindung dies bei einer Einrichtung zum Durchführen des Verfahrens durch die Merkmale im kennzeichnenden Teil des Anspruchs 8 erreicht. Vorteilhafte Weiterbildungen der erfindungsgemäßen Einrichtung sind Gegenstand der auf den Anspruch 8 unmittelbar oder mittelbar rückbezogenen Unteransprüche.

Bei dem erfindungsgemäßen Verfahren bestätigt beispielsweise eine an einem Einkaufswagen vorgesehene Empfangs-/Sendeeinheit, sobald sie in den Bereich einer Sende-/Empfangseinheit einer Abteilung kommt, den einwandfreien Empfang von dieser Sende-/Empfangseinheit übertragenen Arbeits- und Formatierungsanweisungen. Anschließend wird die für die jeweilige Abteilung vorgesehene, spezifische, in der jeweiligen Abteilungs-Sende-/Empfangseinheit dezentral digital gespeicherte Information, beispielsweise mit einer Übertragungsrate von 125 kBit/s, über eine erste Infrarotstrecke übertragen. Deren einwandfreier Empfang wird von der entsprechenden, an dem Einkaufswagen vorgesehene Empfangs-/Sendeeinheit bestätigt.

Die in den Bereich der jeweiligen Abteilung übertragene Information wird in einem in jeder der Empfangs-/Sendeeinheiten vorgesehenen Zwischenspeicher bitweise abgelegt und dann anschließend für den Kunden auf einer Anzeigeeinheit, vorzugsweise in Form eines vierzeiligen Displays jeder der sich in dieser Abteilung befindlichen Empfangs-/Sendeeinheiten sichtbar gemacht. Hierbei sind die Empfangs-/Sendeeinheiten mit Display vorzugsweise im Blickfeld des Kunden am vorderen oberen Korbrand der Einkaufswagen angebracht. Die jeweilige Information wird während des Aufenthalts eines Kunden in der entsprechenden Abteilung im allgemeinen nur einmal auf dem Display der an dem Einkaufswagen angebrachten Empfangs-/Sendeeinheiten dargestellt.

Ferner ist bei der Erfindung durch eine entsprechende Überwachung und durch den verwendeten Übertragungsmodus sichergestellt, daß die angebotene Information jeweils immer so empfangen wird, daß sie von Anfang an ohne irgendwelche Verstümmelungen und Auslassungen auf dem Display wiedergegeben wird. Die empfangene Information wird beispielsweise nach einer gewissen Zeit in dem Speicher der Empfangs-/Sendeeinheit gelöscht, oder sie bleibt für eine eventuelle Wiederholung solange in dem Speicher gespeichert, bis der Einkaufswagen von dem Kunden in eine anderen Abteilung geschoben wird.

Vorzugsweise kann etwa gleichzeitig mit oder unmittelbar nach jeder optischen Wiedergabe einer Information auf einem Display ein diese Informationsabgabe anzeigendes, vorzugsweise kodiertes Signal durch Infrarotstrahlen an die dortige Sende-/Empfangseinheit abgegeben, dort registriert und abfragbar festgehalten werden. Das heißt, bei dem erfindungsgemäßen Verfahren wird bei jeder vollständigen Informationswiedergabe auf einem Display durch das mittels Infrarotlicht übertragene Signal eine Bestätigung und somit eine Rückquittierung gegeben, daß die für diese Abteilung spezifische Information nicht nur von der an jedem Einkaufswagen angebrachten Empfangs-/Sendeeinheit empfangen, sondern auch auf deren Display sichtbar gemacht worden ist.

Die Anzahl der in jeder Abteilung empfangenen Bestätigungssignale wird dezentral registriert und - mit einer abteilungsspezifischen Kennung versehen - abfragbar festgehalten. Aus den mittels eines Handgeräts abfragbaren Bestätigungssignalen wird dann beispielsweise eine Art Protokoll erstellt, welchem u.a. entnehmbar ist, wie oft eine kontinuierlich abgegebene Information tatsächlich über die Displays der Einkaufswagen an Kunden weitergegeben worden ist.

Ferner werden die an den Einkaufswagen vorgesehenen Empfangs-/Sendeeinheiten mit einer Codenummer versehen, die entweder automatisch abgegeben oder aktiviert von all denjenigen Sende-/Empfangseinheiten abgefragt wird, welche an hinsichtlich eines Kundenlaufs interessierenden Abfragestellen des Großmarktes angebracht sind. Hierbei kann allen von den Empfangs-/Sendeeinheiten abgegebenen Informationen einschließlich der Codenummer oder auch allen in den Sende-/ Empfangseinheiten empfangenen Informationen der Empfangszeitpunkt und das jeweilige Datum zugeordnet werden. Insbesondere durch die Zuordnung des Empfangszeitpunkts zu der Codenummer einer Empfangs-/Sendeeinheit kann beispielsweise auf die Verweildauer eines Kunden in bestimmten Abteilungen bzw. unter Umständen sogar bei speziellen Artikeln oder Artikelgruppen geschlossen werden.

Schließlich kann auch noch den dezentral angeordneten Sende/Empfangseinheiten ein Ortskennungscode zugeteilt werden, welcher ebenfalls wieder über eine Infrarotstrecke an jede der Empfangs-/Sendeeinheiten abgegeben wird, welche jeweils in den Bereich der Infrarotstrecke einer solchen Sende-/Empfangseinheit gelangt. In diesem Fall sind dann auch die an den Einkaufswagen angebrachten Empfangs-/Sendeeinheiten mit je einem Speicher zum Speichern von Ortskennungscodes ausgestattet. In diesem Fall brauchen daher nur beispielsweise am Ausgang, vorzugsweise im Bereich der Kassen entsprechende Abfrage- oder Abtasteinrichtungen vorgesehen sein, mittels welchen die in den Empfangs-/Sendeeinheiten der Einkaufswagen zwischengespeicherten Daten abgefragt und übernommen werden. Alle diese entnommenen Daten können dann beispielsweise unmittelbar an einen Zentralspeicher weitergeleitet oder aber in einem örtlichen Speicher gesammelt und aus diesem in regelmäßigen Abständen zur Auswertung und Weiterverarbeitung weitergeleitet werden. Nach der Entnahme der Daten aus dem Speicher der an den Einkaufswagen angebrachten Empfangs-/Sendeeinheiten wird dieser wieder gelöscht, so daß er sofort wieder einsatzbereit ist und erneut Daten speichern kann.

Nachfolgend wird die Erfindung anhand einer bevorzugten Ausführungsform unter Bezugnahme auf die anliegenden Zeichnungen im einzelnen erläutert. Es zeigen:
- Fig.1: schematisch eine in einer Abteilung vorgesehene Sende-/Empfangseinheit sowie eine an einem Einkaufswagen vorgesehene Empfangs-/Sendeeinheit mit Display;
- Fig.2a: eine schematische Darstellung einer Empfangs-/Sendeeinheit mit Display in Vorderansicht;
- Fig.2b: eine Schnittansicht durch die Sende-/Empfangseinheit der Fig.2a;
- Fig.3: schematisch ein mit einer Sende-/Empfangseinheit kommunizierendes Handgerät, und
- Fig.4: schematisch eine mit einem Handgerät verbundene Rechner- und Druckeranordnung.

Zuerst wird prinzipiell ein nach dem erfindungsgemäßen Verfahren arbeitendes Informationssystem beschrieben, mit welchem beispielsweise ein Selbstbedienungsmarkt in die Lage versetzt wird, seine Kunden am sogenannten P.O.P. (Point Of Purchase) zu informieren. Hierzu werden Informationen von in einer Höhe von 2,5 bis 4m installierten Sende-/Empfangseinheiten 5ₗ bis 5ₙ, welche jeweils in n Abteilungen 2 des Selbstbedienungsmarktes vorgesehen sind, zusammen mit der Systemsteuerung dienenden Signalen per Infrarotstrahlen 6 gesendet. Diese Informationen werden von an Einkaufswagen 7ₗ bis 7ₘ angebrachten Empfangs-/Sendeeinheiten 8ₗ bis 8ₘ empfangen und mittels LCD-Displays 9ₗ bis 9ₘ der Empfangs-/Sendeeinheiten 8ₗ bis 8ₘ angezeigt. Jede Empfangs-/Sendeeinheit 8 mit LCD-Display 9 ist hierzu im Blickfeld eines Kunden am vorderen oberen Korbrand eines Korbes 7c jedes Einkaufswagens 7 angebracht. In jedem LCD-Display 9 stehen 1 bis 4 Zeilen für jeweils 40 alphanumerische Zeichen pro Zeile zur Verfügung, wobei eine Zeile nach der anderen angezeigt wird. Der Betreiber des Selbstbedienungsmarktes kann festlegen, ob und in welcher Reihenfolge die Zeilen wiederholt werden sollen, ob eine Zeile sofort erscheinen soll oder langsam aufgebaut wird, ob eine Zeile blinken soll, und/oder ob vor der Anzeige der Information oder vor jeder oder vor einzelnen Zeilen ein akustisches Signal erzeugt werden soll.

In den in den n Abteilungen 2 angebrachten Sende-/Empfangseinheiten 5ₗ bis 5ₙ kann jeweils auch eine Datei aufgebaut werden, in welcher festgehalten wird, wie oft die ausgestrahlte Information tatsächlich auf einem Display 9 angezeigt wurde. Hierzu wird jeweils von den an den Einkaufswagen 7 angebrachten Empfangs-/Sendeeinheiten 8 über eine Infrarotstrecke 6' der einwandfreie Empfang insbesondere auch die einwandfreie Wiedergabe der Information auf dem Display 9 an die entsprechende Sende-/Empfangseinheit 5ₗ bis 5ₙ signalisiert.

Ferner kann beispielsweise zu jeder vollen Stunde die Zeit mit in die Datei geschrieben werden, welche nachstehend auch als Abrechungsdatei bezeichnet wird, da mit ihrer Hilfe beispielsweise bei einer Vermietung an einen Werbungtreibenden gegenüber diesem abgerechnet werden kann. Hierbei kann der Betreiber des Selbstbedienungsmarktes beispielsweise mit dem Werbungtreibenden wahlweise auf der Basis der vermieteten Zeit oder auf der Basis der tatsächlich erfolgten Anzeigen auf den Displays 9 abrechnen.

Ferner kann mit Hilfe des erfindungsgemäßen Informationssystems auch eine sogenannte elektronische Kundenlaufstudie erstellt werden. Hierzu werden die an den Einkaufswagen 7ₗ bis 7ₘ angebrachten Empfangs-/Sendeeinheiten 8ₗ bis 8ₘ mit den ihnen zugeordneten Displays 9ₗ bis 9ₘ fortlaufend elektronisch numeriert. Die Nummer jeder Empfangs-/Sendeeinheit 8ₗ bis 8ₘ kann mittels der in den n Abteilungen 2 angebrachten Sende-/Empfangseinheiten 5ₗ bis 5ₙ abgerufen und in diesen dann zusammen mit der Uhrzeit und dem Datum wiederum in einer Datei abgelegt werden, welche im folgenden auch als Quittungsdatei bezeichnet wird. Durch eine entsprechende Installation der Sende- und Empfangseinheiten 5ₗ bis 5ₙ in den n Abteilungen 2 kann somit festgestellt werden, wann jeder beliebige Einkaufswagen 7ₗ bis 7ₘ in welcher Abteilung gewesen ist.

Das erfindungsgemäße Informationssystem besteht aus vier Grundkomponenten, nämlich einem Computer in Form eines Laptops 1, eines oder mehreren Handgeräten 3, einer Anzahl n in den verschiedenen Abteilungen zu installierenden Sende-/Empfangseinheiten 5ₗ bis 5ₙ und einer Anzahl m an Einkaufswagen 7ₗ bis 7ₘ zu montierenden Empfangs-/Sendeeinheiten 8ₗ bis 8ₘ mit in diesen vorgesehenen LCD-Display 9ₗ bis 9ₘ. Die Funktionen der vier Grundkomponenten des Informationssystems werden nunmehr nachstehend im einzelnen beschrieben.

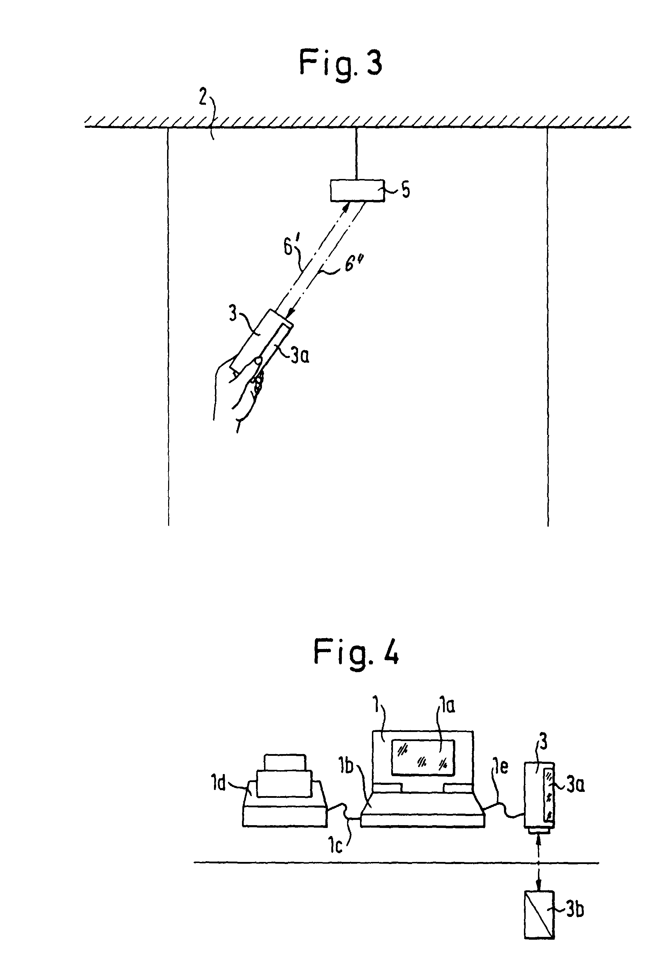

Wie aus der schematischen Darstellung der Fig.4 zu ersehen ist, weist der Laptop 1 einen durch ein Rechteck angedeuteten Bildschirm 1a sowie ein nur schematisch angedeutetes Bedienungsfeld 1b auf. Ferner besteht der Laptop 1, bei welchem es sich beispielsweise um einen MS-DOS-fähigen Rechner handelt, beispielsweise aus einem 512KB Hauptspeicher, einer 20MB Festplatte und einem 3,5MB Laufwerk mit 720KB. Mit dem Laptop 1 ist über Kabel 1c ein Drucker 1d verbunden. Über ein weiteres Kabel le kann der Laptop 1 mit dem Handgerät 3 verbunden werden.

Mit Hilfe der auf der Festplatte des Laptops 1 installierten Software kann ein Benutzer, beispielsweise der Betreiber eines Selbstbedienungsmarktes, eines Großmarktes u.ä. die für Empfangs-Sendeeinheiten 8ₗ bis 8ₘ mit den zugeordneten Displays 9ₗ bis 9ₘ bestimmten Informationen in die gewünschte Form und Formatierung bringen. Nach der Formatierung der einzelnen Informationen kann zusätzlich festgelegt werden, ob in den in den n Abteilungen 2 untergebrachten Sende- und Empfangseinheiten 5ₗ bis 5ₙ Daten für ein Abrechnen auf der Basis der tatsächlich angezeigten Informationen und/ oder zusätzlich Daten für eine Analyse gesammelt werden sollen.

Mit Hilfe eines Übertragungsbefehls können die jeweiligen Informationen, die Formatierungs- und Arbeitsanweisungen über das Kabel 1e in das Handgerät 3 übertragen werden. Von dem Handgerät 3 können die jeweilige Information und die entsprechenden Anweisungen direkt in einen der hierfür vorgesehenen Sende-Empfangseinheiten 5ₗ bis 5ₙ der n Abteilungen oder auch in Datenkarten 3b eingespeichert werden.

Das akku-gepufferte Handgerät 3 dient einem Datenaustausch zwischen dem Laptop 1 und den einzelnen Sende-Empfangseinheiten 5ₗ bis 5ₙ, so daß auf diese Weise eine aufwendige Verkabelung zwischen einer Zentrale und den einzelnen Sende-/Empfangseinheiten 5ₗ bis 5ₙ vermieden ist. Wie in Fig.3 und 4 dargestellt ist, ist an dem Handgerät 3 ein den Displays 9 der Empfangs- und Sendeeinheiten 8 entsprechenden Display 3a vorgesehen. Ferner kann, wie in Fig.4 durch einen strichpunktierten Pfeil angezeigt ist, dem Handgerät 3 wahlweise eine Datenkarte 3b zugeordnet sein.

Wie bereits erwähnt, werden von dem Laptop 1 aus die formartierten Daten über das Kabel 1e in das Handgerät 3 übertragen. Zur Kontrolle können die Informationen auf dem Display 3a des Handgeräts 3 unmittelbar nach der Eingabe zur Anzeige gebracht werden. Ferner können die Informationen zur Datensicherung in eine Datenkarte 3b eingelesen werden.

Wie in Fig.3 schematisch wiedergegeben ist, werden von dem Handgerät 3 aus die Information zusammen mit den Formatierungsanweisungen durch mittels eines strichpunktierten Pfeiles angedeuteter Infrarotstrahlen 6 zu der in der entsprechenden Abteilung 2 untergebrachten Sende-/Empfangseinheit 5 übermittelt. Hierbei kann beispielsweise eine an dem Handgerät 3 vorgesehene (nicht dargestellte) LED grün die erfolgreiche Übertragung und eine LED rot die fehlerhafte Übertragung anzeigen. In dem letzteren Fall ist dann natürlich die Übertragung zu wiederholen. Wie durch einen strichpunktierten Pfeil 6'angedeutet ist, kann ebenfalls wieder per Infrarot die gerade in die Sende-/Empfangseinheit 5 eingegebene Information zur Kontrolle von dieser abgefragt werden.

Ebenso kann auch jederzeit die vorstehend erwähnte Abrechnungsdatei mit dem Handgerät 3 von allen Sende-/Empfangseinheiten 5ₗ bis 5ₙ abgerufen werden. Auch in diesem Fall zeigt die am Handgerät 3 vorgesehene LED grün eine einwandfreie Übertragung an. Zweckmäßigerweise wird nach einer erfolgreichen Übertragung die Datei in der jeweiligen Sende-Empfangseinheit 5ₗ bis 5ₙ gelöscht und steht dann nur noch in dem Handgerät 3 zur Verfügung. Aus diesem Grund sollte die Datei aus Sicherheitsgründen sofort in eine Datenkarte 3b abgespeichert werden.

Falls das Handgerät 3 zur Vorbereitung einer Analyse eingesetzt werden soll, können mit Hilfe des Handgeräts 3 die Sende-/Empfangseinheiten 5ₗ bis 5ₙ mit durchnummerierten Ortskennzahlen versehen werden, damit später zur Erstellung der Analyse die Ortskennzahlen der einzelnen Sende-Empfangseinheiten 5ₗ bis 5ₙ wieder ausgelesen werden können. Ein Durchnumerieren der Ortskennzahlen aller Sende-Empfangseinheiten 5ₗ bis 5ₙ ist unbedingt erforderlich, damit die in den einzelnen Sende-/Empfangseinheiten 5ₗ bis 5ₙ gespeicherten Dateien einwandfrei einem bestimmten Punkt, d.h. einer ganz bestimmten Abteilung 2 in dem Ladenlayout eines Selbstbedienungsmarktes, eines Großmarktes u.ä. zugeordnet werden können.

Ferner kann mit dem Handgerät 3 jederzeit auch über die Infrarotstrecke 6 eine in den Sende-/Empfangseinheiten 5ₗ bis 5ₙ vorgesehene Uhr justiert werden, so daß dem Handgerät 3 die Funktion einer "Masterclock" zufällt. Sowohl zur Erstellung einer Analyse als auch lediglich zur Funktionskontrolle kann jederzeit die in den einzelnen Sende-/Empfangseinheiten 5ₗ bis 5ₙ erstellte Quittungsdatei von diesen Sende-/Empfangseinheiten 5ₗ bis 5ₙ abgerufen, über die Infrarotstrecke 6" an das Handgerät 3 abgegeben und zweckmäßigerweise gleich automatisch in eine Datenkarte 3b eingelesen werden.

Die einzelnen Sende-/Empfangseinheiten 5ₗ bis 5ₙ dienen einerseits zur Übertragung von Informationen zu den an den Einkaufswagen 7ₗ bis 7ₘ angebrachten Empfangs-/Sendeeinheiten 8ₗ bis 8ₘ mit in diesen vorgesehenen Displays 9ₗ bis 9ₘ und andererseits zum Aufbau der erwähnten Abrechnungs- und Quittungsdateien. Die einzelnen Sende-/Empfangseinheiten 5ₗ bis 5ₙ werden in den n Abteilungen 2, für welche sie jeweils bestimmt sind, angebracht, beispielsweise in einer Höhe von 2,5 bis 4m aufgehängt. Den Sende-/Empfangseinheiten 5ₗ bis 5ₙ ist entweder ein (nicht dargestelltes) Netzgerät oder ein (ebenfalls nicht dargestelltes) Ladegerät zugeordnet. Die Sende-/Empfangseinheiten 5ₗ bis 5ₙ sind bei normalem Einsatz für mindestens etwa 4 Wochen akkugepuffert.

Mittels des Handgeräts 3 wird die in die jeweilige Abteilung 2 abzugebende Information in die dort vorgesehenen Sende-/ Empfangseinheit 5 eingespeichert. Sobald dies erfolgt ist, beginnt die Sende-/Empfangseinheit 5 automatisch jeweils ihre Nummer in Form der Ortskennzahl sowie die Arbeits- und Formatierungsanweisungen zu übertragen. Sobald von einer an einem Einkaufswagen 7 angebrachten Empfangs-/Sendeeinheit 8 oder mittels des Handgeräts 3 der Empfang der Nummer und der sonstigen Anweisungen quittiert wird, wird die für die jeweilige Abteilung vorgesehene, spezielle Information übertragen. Der einwandfreie Empfang wird anschließend von der entsprechenden Empfangs-/Sendeeinheit 8 bestätigt. Wie bereits erwähnt, kann erforderlichenfalls mit diesen Bestätigungen eine Abrechnungsdatei aufgebaut werden, welche dann jederzeit mittels des Handgeräts 3 abgerufen werden kann. Hierbei wird dann automatisch die Nummer in Form der Ortskennzahl der jeweiligen Sende-/Empfangseinheit 5ₗ bis 5ₙ und die an diese abgegebene Information mit übertragen, um auf diese Weise Verwechslungen auszuschließen. (Wenn von dem Handgerät 3 der einwandfreie Empfang signalisiert wird, wird die gerade abgerufene Datei in der entsprechenden Sende-/ Empfangseinheit 5ₗ bis 5ₙ gelöscht).

Damit auch größerflächige Abteilungen mit ein und derselben Information bestrahlt werden können, können beispielsweise zehn Sende-/Empfangseinheiten 5 zusammengeschaltet werden, wobei eine beliebige Sende-/Empfangseinheit 5 den Anfangspunkt bildet. Die restlichen Sende-/Empfangseinheiten 5 werden dann über Synchronisationskabel mit der den Anfangspunkt bildenden Sende-/Empfangseinheit 5 in Reihe geschaltet.

Jede der Sende-Empfangseinheiten 5ₗ bis 5ₙ kann zur reinen Analyse oder zu einer Analyse kombiniert mit einer Informationsübertragung eingesetzt werden. Hierzu muß dann allerdings bei jeder Sende-/Empfangseinheit 5 eine Speichererweiterung vorgenommen werden, damit mittels des Handgeräts 3 die jeweilige Ortskennzahl und die Arbeits- und Formatierungsanweisungen zusammen mit der Information einprogrammiert werden können. Sobald die Übertragung von dem Handgerät 3 an die jeweilige Sende-/Empfangseinheit 5 erfolgt ist, strahlt die Sende-/Empfangseinheit ihre Nummer in Form der Ortskennzahl sowie die Arbeits- und Formatierungsanweisungen ab. Sobald diese Daten von einer an einem Einkaufswagen 7 angebrachten Empfangs-/Sendeeinheit 8 mit ihrer Codenummer quittiert werden, wird die Codenummer der quittierenden Empfangs-/ Sendeeinheit 8 zusammen mit der Uhrzeit in der eingangs erwähnten Quittungsdatei abgespeichert.

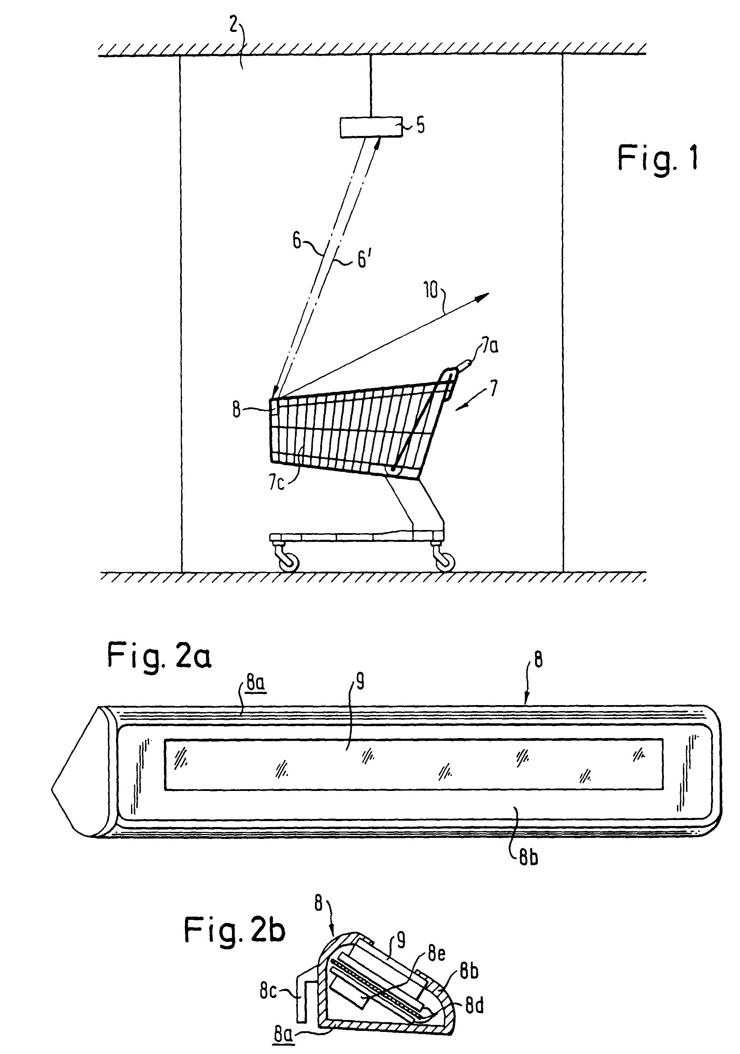

Da im allgemeinen in der entsprechenden Sende-/Empfangseinheit 5 eine Information gespeichert ist, wird diese anschließend über die Infrarotstrecke 6 (Fig.1) zu dieser Empfangs-/ Sendeeinheit 8 übertragen. (Erfolgt die Quittierung jedoch von einem Handgerät 3 aus, so wird in die Quittungsdatei der Sende-/Empfangseinheit 5 nichts eingespeichert, sondern nur die Information übertragen. In diesem Fall wird dann auf dem Handgerät 3 angezeigt, daß die Sende-/Empfangseinheit 5 auf Analysebetrieb eingestellt ist.) Die in den Sende-/Empfangseinheiten 5ₗ bis 5ₙ gespeicherten Quittungsdateien können mittels des Handgeräts 3 ausgelesen werden, und werden dann sofort automatisch in eine Datenkarte 3b eingelesen. Bei einer rechnergestützten Verknüpfung aller Quittungsdateien kann anschließend eine Kundenlaufstudie erstellt werden.

Das in jeder Empfangs-/Sendeeinheit 8 vorgesehene Display 9 dient zum Anzeigen der von einer Sende-/Empfangseinheit 5 übertragenen Information. Ferner quittieren die Empfangs-/ Sendeeinheiten 8 den einwandfreien Empfang der Arbeits- und Formatierungsanweisungen sowie der übertragenen Information zusammen mit der entweder werkseitig eingestellten oder mittels des Handgeräts 3 eingegebenen Codenummer.

Wie aus Fig.2a und 2b zu ersehen ist, ist jede Empfangs-/ Sendeinheit 8 mittels eines an der Rückseite ihres Gehäuses 8a ausgebildeten L-förmigen hakenartigen Ansatzes 8c mit Hilfe eines (nicht dargestellten) Spezialwerkzeugs auf der Innenseite des Korbes 7c eines Einkaufswagens 7 (Fig.1) am vorderen, dem Schiebegriff 7a jedes Einkaufswagens 7 genau gegenüberliegenden oberen Korbrand so montiert und ausgerichtet, daß die ein Display 9 in Form eines LCD-Moduls enthaltende Gehäusevorderseite 8b in Richtung des Gesichtsfeldes eines den Einkaufswagen 7 schiebenden Kundens ausgerichtet ist, wie in Fig.1 durch einen Pfeil 10 angedeutet ist. Jede Empfangs-/Sendeeinheit 8 weist ferner eine im Schnitt angedeutete Leiterplatte 8d sowie ein Elektronikmodul 8e auf. Jede der an Einkaufswagen 7 montierten Empfangs-/Sendeeinheiten 8 bezieht Energie aus nicht näher dargestellten Akkus, welche mit Hilfe von ebenfalls nicht dargestellten Solarzellen durch das Umgebungslicht nachgeladen werden. Dadurch ist jede an einem Einkaufswagen 7 angebrachte Empfangs-/Sendeeinheit 8 mit einem Display 9 sofort satzbereit.

Sobald eine Empfangs-/Sendeeinheit 8 in den Bereich einer Sende-/Empfangseinheit 5 kommt, bestätigt die Empfangs-/ Sendeeinheit 8 den einwandfreien Empfang der Arbeits- und Formatierungsanweisung durch Abstrahlung ihrer Codenummer. Üblicherweise wird dann die Sende-/Empfangseinheit 5 anschließend die in ihr eingespeicherte Information ausstrahlen, die durch Infrarotstrahlen 6 an die in ihrem Bereich befindliche Empfangs- und Sendeinheit 8 übertragen und in dieser abgespeichert wird.

Das bedeutet, der Kunde braucht nicht unterhalb einer Sende-/Empfangseinheit 5 zu verweilen, um die vollständige Information zu erhalten. Die Empfangs-/Sendeeinheit 8 überprüft die fehlerfreie Übertragung der Information und bestätigt diese. Erst nach der Bestätigung des einwandfreien Empfangs der Information durch die Empfangs-/Sendeeinheit 8 wird die über die Infrarotstrecke 6 übertragene Information gemäß den Formatierungsanweisungen auf ihrem Display 9 zur Anzeige gebracht.

Hierzu wird in der Empfangs-/Sendeeinheit 8 die Information beispielsweise mit einer Taktfrequenz von 16 kHz in ein Schieberegister geschoben. Nach jeweils acht (8) eingeschobenen Informationsbits wird wiederum ein Takt erzeugt, wodurch diese nun in paralleler Form im ASCII-Format vorliegende Informationsbyte in das Display 9 hineingeschoben wird. Dieser Ablauf erfolgt nun beispielsweise weitere 79-mal hintereinander, so daß in diesem Fall 80 alphanumerische Zeichen in beispielsweise zwei Zeilen angezeigt werden. Die Ausgabe-Formatierung wird hierbei durch die Elektronik der Empfangs-/Sendeeinheit 8 erzeugt.

## Patentansprüche

1. Verfahren zum Versorgen verschiedener Abteilungen eines mit einer Vielzahl Einkaufswagen bestückten SB-Großmarktes mit für eine Abteilung spezifischen Informationen, wobei in den Abteilungen jeweils eine Sende-/Empfangseinheit (5) und an Einkaufswagen jeweils eine Empfangs-/Sendeeinheit (8) mit Anzeigevorrichtung (9) vorgesehen ist und die Übertragung mittels Infrarotstrahlen erfolgt, dadurch **gekennzeichnet,** daß
- jede der Empfangs-/Sendeeinheiten (8), sobald sie in den Bereich einer Sende-/Empfangseinheit (5) kommt, den einwandfreien Empfang von der Sende-/Empfangseinheit (5) übertragener Arbeits- und Formatierungsanweisungen bestätigt,
- die für die jeweilige Abteilung vorgesehene, spezifische Information, welche in der entsprechenden Abteilungs-Sende-/Empfangseinheit (5) dezentral digital gespeichert ist, über eine erste Infrarotstrecke (6) übertragen wird,
- der einwandfreie Empfang der für eine bestimmte Abteilung vorgesehenen, spezifischen Information von der entsprechenden Empfangs-/Sendeeinheit (8) bestätigt wird, und
- die übertragene Information jeweils mittels der an Einkaufswagen (7) angebrachten Empfangs-/Sendeeinheiten (8) der in der jeweiligen Abteilung (2) befindlichen Einkaufswagen (7) empfangen, zwischengespeichert und jeweils auf der Anzeigevorrichtung (9) der Empfangs-/Sendeeinheiten (8) wiedergegeben wird.

2. Verfahren nach Anspruch 1, dadurch **gekennzeichnet,** daß unmittelbar nach jeder Wiedergabe einer für eine bestimmte Abteilung (2) spezifischen Information auf der Anzeigevorrichtung (9) der Einkaufswagen-Empfangs-/Sendeeinheit (8) ein diese optische Informationswiedergabe bestätigendes Signal über eine zweite Infrarotstrecke (6') an die Abteilungs-Sende-/Empfangseinheit (5) übertragen und dort registriert wird.

3. Verfahren nach Anspruch 1, dadurch **gekennzeichnet**, daß die Wiedergabe der für eine Abteilung (2) spezifischen Information auf der Anzeigevorrichtung (9) einer Einkaufswagen-Empfangs/Sendeeinheit (8) mit Hilfe spezieller Kennungsimpulse so gesteuert wird, daß die jeweilige Information immer nur von Anfang an einmal vollständig übertragen wird.

4. Verfahren nach einem der Ansprüche 1 oder 2, dadurch **gekennzeichnet,**
daß jede der Einkaufswagen-Empfangs-/Sendeeinheiten (8) mit einer Codenummer versehen wird, und
daß jede Codenummer der Empfangs-/Sendeeinheiten (8) automatisch an alle diejenigen Abteilungs-Sende-/Empfangsheiten (5) abgegeben wird, welche an hinsichtlich eines Kundenlaufs interessierenden Abfragestellen des Großmarktes angebracht sind.

5. Verfahren nach einem der Ansprüche 1 oder 2, dadurch **gekennzeichnet,** daß
jede der Einkaufswagen-Empfangs-/Sendeeinheiten (8) mit einer Codenummer versehen wird, und
diese Codenummer jeweils von all denjenigen Abteilungs-Sende-/Empfangseinheiten (5) abgefragt wird, welche an hinsichtlich eines Kundenlaufs interessierenden Abfragestellen des Großmarktes angebracht sind.

6. Verfahren nach einem der Ansprüche 2, 4 oder 5, dadurch **gekennzeichnet,** daß in den Abteilungs-Sende-/Empfangseinheiten (5) jedem eine optische Wiedergabe bestätigenden Signal und/oder jeder empfangenen Codenummer einer der Einkaufswagen-Empfangs-/Sendeeinheiten (8) der genaue Empfangszeitpunkt mit Datumsangabe zugeordnet wird.

7. Verfahren nach einem der Ansprüche 1 oder 2 dadurch **gekennzeichnet,**
daß jeder der Abteilungs-Sende-/Empfangseinheiten (5), die an hinsichtlich eines Kundenlaufs interessierenden Abfragestellen des Großmarktes angebracht sind, mit einem Ortskennungscode versehen wird,
daß jede der Abteilungs-Sende-/Empfangseinheiten (5) ihren Ortskennungscode über die erste Infrarotstrecke (6) an jede der Einkaufswagen-Empfangs-/Sendeeinheiten (8) abgibt, welche in den Bereich der jeweiligen Infrarotstrecke (6) kommen, und daß jeder empfangene Kennungscode einer Abteilungs-Sende-/Empfangseinheit (5) in den Einkaufswagen-Empfangs-/Sendeeinheiten (8) zusammen mit Empfangszeitpunkt und -datum gespeichert wird.

8. Einrichtung mit in Abteilungen (2) eines Großmarktes angeordneten Infrarot-Sende-/Empfangseinheiten (5) und mit an den Einkaufswagen (7) des Großmarktes angebrachten Infrarot-Empfangs-/Sendeeinheiten (8) mit zugeordneter Anzeigevorrichtung (9) zur Durchführung des Verfahrens nach einem der Ansprüche 1 bis 7, dadurch **gekennzeichnet,**
daß jeder der in Abteilungen (2) eines Großmarktes angeordneten Infrarot-Sende-/Empfangseinheiten (5) mit einem Speicher versehen ist, der dezentral mittels eines Handgeräts (3) mit einer für die jeweilige Abteilung spezifischen Information über eine zweite Infrarotstrecke (6') ladbar ist,
wobei die Infrarot-Sende-/Empfangseinheiten (5) in einem vorgegebenen Zyklus jeweils Arbeits- und Formatierungsanweisungen über eine erste Infrarotstrecke (6) abgeben,
deren einwandfreier Empfang von den Infrarot-Empfangs-/Sendeeinheiten (8), sobald sie in den Bereich von Infrarot-Sende/Empfangseinheiten (5) kommen, über die zweite Infrarotstrecke (6') bestätigt wird,
die für die jeweilige Abteilung vorgesehene, spezifische Information über die erste Infrarotstrecke (6) übertragen wird, deren einwandfreier Empfang von der entsprechenden Infrarot-Empfangs-/ Sendeeinheit (8) über die zweite Infrarotstrecke (6') bestätigt wird, und
die Anzeigevorrichtung der Infrarot-Empfangs-/Sendeeinheiten (8) zur Wiedergabe der Information ein Display und einen Speicher aufweist.

9. Einrichtung nach Anspruch 8, dadurch **gekennzeichnet,** daß das Display (9) jeder Infrarot-Empfangs-/Sendeeinheit (8) am vorderen, dem Schiebegriff (7a) gegenüberliegenden, oberen Korbrand des Einkaufswagens (7) im Kunden-Blickfeld angebracht ist.

10. Einrichtung nach Anspruch 8, dadurch **gekennzeichnet,** daß das Display (9) ein vierzeiliges Display für jeweils vierzig alphanumerische Zeichen pro Zeile ist.

11. Einrichtung nach einem der Ansprüche 8 bis 10, dadurch **gekennzeichnet,** daß das Handgerät ein akku-gepuffertes Handgerät (3) mit einem dem Display (9) der Infrarot-Empfangs-/Sendeeinheit (8) entsprechenden Display (3a) ist, um jeweils den Speicher jeder dezentral zu versorgenden Infrarot-Sende-/Empfangseinheit (8) mit für die jeweilige Abteilung (2) spezieller Information und Ortskennzahl zu laden.

## Claims

1. Method of supplying different departments of a self-service supermarket, which is equipped with a plurality of shopping trolleys, with data specific to a department, wherein a respective transmit-receive unit (5) is provided in each of the departments and a respective receive-transmit unit (8) with display device (9) is provided at each shopping trolley and the transmission is effected by means of infrared beams, characterised thereby that
- each of the receive-transmit units (8) as soon as it comes into the range of a transmit-receive unit (5) confirms the correct reception by the transmit-receive unit (5) of the transmitted working and formatting instructions,
- the specific information, which is provided for the respective department and which is decentrally, digitally stored in the corresponding department transmit-receive unit (5), is transmitted by way of a first infrared path (6),
- the correct reception of the specific information, which is provided for a determined department, by the corresponding receive-transmit unit (8) is confirmed, and
- the transmitted information is each time recorded, intermediately stored and reproduced each time on the display device (9) of the receive-transmit units (8), by means of the receive-transmit units (8), which are mounted at the shopping trolleys (7), of the shopping trolleys (9) located in the respective department (2).

2. Method according to claim 1, characterised thereby that directly after each reproduction of a specific information, which is intended for a determined department (2), on the display device (9) of the shopping trolley receive-transmit unit (8) a signal confirming this optical information reproduction is transmitted by way of a second infrared path (6') to the department transmit-receive unit (5) and registered there.

3. Method according to claim 1, characterised thereby that the reproduction of the information, which is specific for a department (2), on the display device (9) of the shopping trolley receive-transmit unit (8) is so controlled with the aid of special recognition pulses that the respective information is always transmitted completely only from the start once.

4. Method according to one of claims 1 and 2, characterised thereby that each of the shopping trolley receive-transmit units (8) is provided with a code number, and that each code number of the receive-transmit units (8) is automatically issued to all of those department transmit-receive units (5) which are placed at enquiry points, which are of interest with regard to customer movement, of the supermarket.

5. Method according to one of claims 1 and 2, characterised thereby that each of the shopping trolley receive-transmit units (8) is provided with a code number and the code number is interrogated each time by all of those department transmit-receive units (5) which are placed at enquiry points, which are of interest with regard to customer movement, of the supermarket.

6. Method according to one of claims 2, 4 and 5, characterised thereby that in the department transmit-receive units (5) the exact reception time instant with statement of date is associated with each signal which activates an optical reproduction and/or each received code number of one of the shopping trolley receive-transmit units (8).

7. Method according to one of claims 1 and 2, characterised thereby that each of the department transmit-receive units (5) which is placed at enquiry points, which are of interest with regard to customer movement, of the supermarket is provided with a location recognition code, that each of the department transmit-receiver units (5) delivers its location recognition code by way of the first infrared path (6) to each of the shopping trolley receive-transmit units (8) which come into the range of the respective infrared path (6) and that each received recognition code of a department transmit-receive unit (5) is stored in the shopping trolley receive-transmit units (8) together with reception time instant and date.

8. Equipment with infrared transmit-receive units (5) arranged in departments (2) of a supermarket and with infrared receive-transmit units (8), which are mounted at the shopping trolleys (7) of the supermarket, with associated display device (9), for carrying out the method according to one of claims 1 to 7, characterised thereby that each of the infrared transmit-receive units (5) arranged in departments (2) of a supermarket is provided with a storage device which is decentrally loadable by means of a manual apparatus (3) by way of a second infrared path (6') with information specific to the respective department, wherein the infrared transmit-receive units (5) issue respective working and formatting instructions in a predetermined cycle by way of a first infrared path (6), the correct reception of which by the infrared receive-transmit units (8) is confirmed by way of the second infrared path (6') as soon as they come into the range of infrared transmit-receive units (5), the specific information provided for the respective department is transmitted by way of the first infrared path (6), the correct reception of which by the corresponding infrared receive-transmit unit (8) is confirmed by way of the second infrared path (6'), and the display device of the infrared receive-transmit units (8) has a display and a store for reproduction of the information.

9. Equipment according to claim 8, characterised thereby that the display (9) of each infrared receive-transmit unit (8) is mounted at the front upper basket edge, which is opposite the push handle (7a), of the shopping trolley (7) in the customer field of vision.

10. Equipment according to claim 8, characterised thereby that the display (9) is a four-line display for each fourth alpha-numeric character per line.

11. Equipment according to one of claims 8 to 10, characterised thereby that the manual apparatus is a battery-powered manual apparatus (3) with a display (3a) which corresponds with the display (9) of the infrared receive-transmit unit (8) so as to each time charge the storage device of each infrared transmit-receive unit (8), which is to be supplied decentrally, with information and location characteristic special to the respective department (2).

## Revendications

1. Procédé pour délivrer, à différents rayons d'un supermarché libre-service équipé d'un grand nombre de chariots à provisions, des informations spécifiques d'un rayon, une unité (5) d'émission/réception étant respectivement prévue dans les rayons et une unité (8) de réception/émission, munie d'un dispositif d'affichage (9), étant respectivement prévue sur des chariots à provisions, et la transmission s'opérant par rayonnements infrarouges, caractérisé par le fait que
- chacune des unités (8) de réception/émission confirme, dès qu'elle parvient dans la région d'une unité (5) d'émission/réception, la réception impeccable d'instructions de travail et de formatage transmises par l'unité (5) d'émission/réception ;
- l'information spécifique prévue pour le rayon considéré, qui est mémorisée en mode numérique décentralisé dans l'unité correspondante (5) d'émission/réception d'un rayon, est transmise par l'intermédiaire d'un premier trajet d'infrarouges (6) ;
- la réception impeccable de l'information spécifique, prévue pour un rayon déterminé, est confirmée par l'unité correspondante (8) de réception/émission ; et
- au moyen des unités (8) de réception/émission implantées sur des chariots à provisions (7) et équipant les chariots à provisions (7) situés dans le rayon considéré (2), l'information transmise est respectivement reçue, mémorisée provisoirement, puis reproduite sur le dispositif respectif d'affichage (9) des unités (8) de réception/émission.

2. Procédé selon la revendication 1, caractérisé par le fait que, directement après chaque reproduction, sur le dispositif d'affichage (9) de l'unité (8) de réception/émission d'un chariot à provisions, d'une information spécifique d'un rayon déterminé (2), un signal attestant cette reproduction optique d'information est transmis, par l'intermédiaire d'un second trajet d'infrarouges (6'), à l'unité (5) d'émission/réception d'un rayon,dans laquelle il est enregistré.

3. Procédé selon la revendication 1, caractérisé par le fait que la reproduction de l'information spécifique d'un rayon (2), sur le dispositif d'affichage (9) d'une unité (8) de réception/émission d'un chariot à provisions, est commandée à l'aide d'impulsions spéciales d'identification, de telle sorte que l'information considérée soit intégralement transmise en une seule fois, en permanence uniquement depuis le début.

4. Procédé selon l'une des revendications 1 ou 2, caractérisé par le fait
que chacune des unités (8) de réception/émission des chariots à provisions est munie d'un numéro de code ; et
que chaque numéro de code des unités (8) de réception/émission est automatiquement délivré à toutes les unités (5) d'émission/réception des rayons,qui sont installées en des points d'interrogation du supermarché revêtant un intérêt quant à un flux de clientèle.

5. Procédé selon l'une des revendications 1 ou 2, caractérisé par le fait que
chacune des unités (8) de réception/émission des chariots à provisions est munie d'un numéro de code ; et
ce numéro de code est respectivement appelé dans toutes les unités (5) d'émission/réception des rayons,qui sont installées en des points d'interrogation du supermarché revêtant un intérêt quant à un flux de clientèle.

6. Procédé selon l'une des revendications 2, 4 ou 5, caractérisé par le fait que, dans les unités (5) d'émission/réception des rayons, l'instant précis de la réception, comportant une indication de date, est affecté à chaque signal confirmant une reproduction optique et/ou à chaque numéro de code reçu de l'une des unités (8) de réception/émission des chariots à provisions.

7. Procédé selon l'une des revendications 1 ou 2, caractérisé par le fait
que chacune des unités (5) d'émission/réception des rayons, qui sont installées en des points d'interrogation du supermarché revêtant un intérêt quant à un flux de clientèle, est munie d'un code de localisation ;
que chacune des unités (5) d'émission/réception des rayons délivre son code de localisation, par l'intermédiaire du premier trajet d'infrarouges (6), à chacune des unités (8) de réception/émission des chariots à provisions qui entrent dans la zone du trajet considéré d'infrarouges (6) ; et
que chaque code d'identification reçu d'une unité (5) d'émission/réception d'un rayon est mémorisé, dans les unités (8) de réception/émission des chariots à provisions, conjointement à l'instant et à la date de réception.

8. Dispositif comprenant des unités (5) d'émission/réception par infrarouges, installées dans des rayons (2) d'un supermarché, et des unités (8) de réception/émission par infrarouges qui sont implantées sur les chariots à provisions (7) du supermarché et présentent un dispositif d'affichage (9) associé, pour la mise en oeuvre du procédé selon l'une des revendications 1 à 7, caractérisé par le fait
que chacune des unités (5) d'émission/réception par infrarouges, installées dans des rayons (2) d'un supermarché, est pourvue d'une mémoire pouvant être chargée de manière décentralisée, au moyen d'un appareil manuel (3) et par l'intermédiaire d'un second trajet d'infrarouges (6'), par une information spécifique du rayon considéré,
dispositif dans lequel les unités (5) d'émission/réception par infrarouges délivrent respectivement en un cycle préétabli, par l'intermédiaire d'un premier trajet d'infrarouges (6), des instructions de travail et de formatage
dont la réception impeccable est confirmée, par l'intermédiaire du second trajet d'infrarouges (6'), par les unités (8) de réception/émission par infrarouges dès qu'elles parviennent dans la région d'unités (5) d'émission/réception par infrarouges ;
l'information spécifique, prévue pour le rayon considéré, est transmise par l'intermédiaire du premier trajet d'infrarouges (6) et sa réception impeccable, par l'unité correspondante (8) de réception/émission par infrarouges, est confirmée par l'intermédiaire du second trajet d'infrarouges (6') ; et
le dispositif d'affichage des unités (8) de réception/émission par infrarouges présente, en vue de la reproduction de l'information, un écran de visualisation et une mémoire.

9. Dispositif selon la revendication 8, caractérisé par le fait que l'écran de visualisation (9) de chaque unité (8) de réception/émission par infrarouges est implanté dans le champ de vision du client, sur le bord antérieur supérieur du panier du chariot à provisions (7) qui est situé à l'opposé de la barre de poussée (7a).

10. Dispositif selon la revendication 8, caractérisé par le fait que l'écran de visualisation (9) est un écran de visualisation à quatre lignes, respectivement destiné à quarante signes alphanumériques pour chaque ligne.

11. Dispositif selon l'une des revendications 8 à 10, caractérisé par le fait que l'appareil manuel est un appareil manuel (3) à batterie tampon, muni d'un écran de visualisation (3a) correspondant à l'écran de visualisation (9) de l'unité (8) de réception/émission par infrarouges, afin de charger respectivement la mémoire de chaque unité (8) d'émission/réception par infrarouges, devant être alimentée de manière décentralisée, par une information et un indicatif de localisation spécifiques du rayon considéré (2).
